(19) Europäisches Patentamt
European Patent Office
Office européen des brevets

(11) Veröffentlichungsnummer: **0 160 724**
**B1**

(12) **EUROPÄISCHE PATENTSCHRIFT**

(45) Veröffentlichungstag der Patentschrift: **03.08.88**

(21) Anmeldenummer: **84105270.7**

(22) Anmeldetag: **09.05.84**

(51) Int. Cl.[4]: **C 08 L 67/06,** C 08 L 75/04, C 08 F 283/01, C 08 J 3/28, C 08 K 5/53, C 08 K 5/00, C 09 D 5/34

# (54) Dichtungsmasse, Verfahren zu ihrer Herstellung und ihre Verwendung.

(43) Veröffentlichungstag der Anmeldung: **13.11.85 Patentblatt 85/46**

(45) Bekanntmachung des Hinweises auf die Patenterteilung: **03.08.88 Patentblatt 88/31**

(84) Benannte Vertragsstaaten: **AT BE CH DE FR GB IT LI LU NL SE**

(56) Entgegenhaltungen:
**EP - A - 0 007 086**
**EP - A - 0 023 634**
**EP - A - 0 062 839**
**DE - A - 1 813 011**
**DE - B - 2 426 603**
**DE - B - 2 513 142**

(73) Patentinhaber: **Kunststoff- & Lackfabrik Kemper, Holländische Strasse 36, D-3502 Vellmar/Obervellmar (DE)**

(72) Erfinder: **Kemper, Heinz B., Dr.rer.nat., Dipl.-Chem., Wigandstrasse 15a, D-3500 Kassel Wilhelmshöhe (DE)**

(74) Vertreter: **von der Bey, Gerhard, Auenstrasse 31a, D-8012 Ottobrunn (DE)**

**EP 0 160 724 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Dichtungsmassen, die sich insbesondere im Bauwesen verwenden lassen und beispielsweise zum Abdichten von Gebäuden oder Einrichtungen gegen Wasser und Feuchtigkeit, atmosphärische Einflüsse oder aggressive Medien eignen.

Dichtungsmassen sind häufig stark schwankenden Einflüssen ausgesetzt. Hauptsächlich Licht, Temperatur und Feuchtigkeit können einzeln oder in Kombinationen die Wirksamkeit von Dichtungsmassen beeinträchtigen oder gar unbrauchbar machen. Man hat daher versucht, Dichtungsmassen zu entwickeln, die den gewünschten Erfordernissen weitgehend entsprechen. Dennoch sind die bekannten Lösungsvorschläge noch nicht voll befriedigend.

Vorliegender Erfindung lag daher die Aufgabe zugrunde, eine Dichtungsmasse zur Verfügung zu stellen, die sowohl in der Wärme als auch in der Kälte, unter dem Einfluss von Feuchtigkeit oder Trockenheit und bei starker Sonnenbestrahlung ihre Bestimmung erfüllt und ausserdem gefahrlos für die mit dem Auf- oder Anbringen der Dichtungsmasse beauftragten Beschäftigten ist. Schliesslich soll die Dichtungsmasse umweltfreundlich sein, das heisst, keine für die Umwelt oder die unmittelbare Umgebung nachteilig beeinträchtigende Stoffe enthalten und bzw. oder abgeben.

Die Aufgabe wird erfindungsgemäss gelöst durch eine Dichtungsmasse, die gekennzeichnet ist durch einen Gehalt an

(a) ungesättigten Polyesterharzen und damit mischpolymerisierbaren Monomeren als Vernetzungsmittel,

(b) 2-Hydroxy-2-methyl-1-phenyl-propan-1-on und/oder Acylphosphinoxid-Verbindungen als Lichtinitiatoren und

(c) Polyurethanen und/oder Butadien-Styrol-Mischpolymerisaten und/oder einem Reaktionsprodukt eines freie Isocyanatgruppen aufweisenden Polyurethans mit einem Hydroxylgruppen aufweisenden Polybutadien als Elastizitätsmodifizierungsmittel und gegebenenfalls

(d) Hilfsmitteln und/oder Pigmenten und/oder Farbstoffen.

Die aus einem Gemisch der Komponenten (a), (b) und (c) sowie gegebenenfalls (d) erhältliche Dichtungsmasse zeichnet sich in erster Linie dadurch aus, dass sie kein Lösungsmittel enthält, das Umwelt und/oder unmittelbare Umgebung nachteilig beeinflussen könnte. Das flüssige Gemisch lässt sich ohne Schwierigkeiten und gefahrlos an Ort und Stelle aufbringen und härtet auch bei diffusem Tageslicht in sehr kurzer Zeit aus. Die ausgehärtete Dichtungsmasse zeigt eine sehr gute Kälte- und Bruchfestigkeit, ist also bei tiefen Temperaturen noch sehr elastisch, versprödet nicht und haftet fest am Untergrund.

Für die ungesättigten Polyesterharze der Komponente (a) eignen sich die üblichen ungesättigten Polykondensationsprodukte aus vorzugsweise Dicarbonsäuren und Glykolen. Als Dicarbonsäuren können auch deren veresterbare Derivate, insbesondere deren Anhydride, verwendet werden.

Bei den ungesättigten Polyesterharzen kann die Ungesättigtheit sowohl im Dicarbonsäureanteil als auch im Diolanteil liegen, vorzugsweise jedoch im Dicarbonsäureanteil.

Als Dicarbonsäuren, die olefinisch ungesättigt sind, werden vorzugsweise Maleinsäure, Maleinsäureanhydrid, Fumarsäure, Chlormaleinsäure, Itaconsäure oder Citraconsäure verwendet, während sozusagen als «gesättigte» Dicarbonsäuren Phthalsäure, Phthalsäureanhydrid, Isophthalsäure, Terephtalsäure, Bernsteinsäure, Adipinsäure, Sebacinsäure oder Pimelinsäure verwendet werden. Das Verhältnis von gesättigten zu ungesättigten Dicarbonsäuren beträgt vorzugsweise 5:1 bis 5:10. Als Glykole werden vorzugsweise Äthylenglykol, Propylenglykol, 1,3-Butylenglykol, Butendiol-1,4 und besonders bevorzugt Neopentylglykol verwendet.

Für die Herstellung der ungesättigten Polyesterharze können die üblichen bekannten Verfahren angewendet werden, wobei die Veresterungsreaktion vorzugsweise so geführt wird, dass die ungesättigten Polyesterharze Säurezahlen von 15 bis 30 haben. Es gelangen bevorzugt flüssige Polyesterharze zum Einsatz, doch können auch feste Polyesterharze verwendet werden, wenn sie in der Menge des mitzuverwendenden Vernetzungsmittels löslich sind.

Für die mit den vorgenannten Polyesterharzen polymerisierbaren Monomeren, die als Vernetzungsmittel bei den ungesättigten Polyesterharzen dienen, eignen sich aromatische und/oder aliphatische Vinylverbindungen, insbesondere Styrol, α-Methylstyrol, p-Chlorstyrol, Vinyltoluole, Divinylbenzol, Methacrylsäure-methylester und -n-butylester, Acrylsäure-tert.-butylester, das Reaktionsprodukt aus Caprolacton und Acrylsäure sowie Phthalsäurediallylester.

Wenn die Dichtungsmassen eine grössere Härte aufweisen sollen, werden als Vernetzungsmittel di- oder trifunktionelle Acryl- oder Methacrylsäureverbindungen, wie Hexandiolacrylat, Trimethylolpropan-triacrylat, Tripropylenglycoldiacrylat und Triäthylenglycol-dimethacrylat, bevorzugt.

Die aromatischen und/oder aliphatischen Vinylverbindungen liegen in einer Menge von 25 bis 75 Gewichtsprozent, vorzugsweise von 30 bis 65 Gewichtsprozent, bezogen auf das Gewicht der ungesättigten Polyesterharze, vor und können einzeln oder in Gemischen eingesetzt werden. Besonders bevorzugt als Vernetzungsmittel sind Styrol und Vinyltoluol.

Die Viskosität der Komponente (a) liegt vorzugsweise im Bereich von 900 bis 2500 cP.

Eine besondere Bedeutung kommt den Lichtinitiatoren der Komponente (b) zu, da sie bei der Vernetzungsreaktion zwischen den ungesättigten Polyesterharzen und den damit polymerisierbaren Monomeren nicht zu vergilbenden Produkten führen sollen. Hierfür werden erfindungsgemäss eingesetzt 2-Hydroxy-2-methyl-1-phenyl-propan-1-on und/oder Acylphosphinoxid-Verbindungen, insbesondere solche der allgemeinen Formel

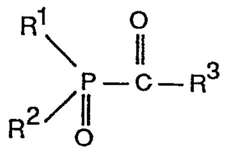

in der $R^1$ für einen geradkettigen oder verzweigten Alkylrest mit 1 bis 6 Kohlenstoffatomen, einen Cyclohexyl-, Cyclopentyl-, Aryl-, halogen-, alkyl- oder alkoxyl-substituierten Aryl-, einen S- oder N-haltigen fünf- oder sechsgliedrigen heterocyclischen Rest steht;
$R^2$ die Bedeutung von $R^1$ hat, wobei $R^1$ und $R^2$ untereinander gleich oder verschieden sein können, oder für einen Alkoxyrest mit 1 bis 6 Kohlenstoffatomen, für einen Aryloxy- oder einen Arylalkoxyrest steht, oder $R^1$ und $R^2$ unter Einbeziehung des Phosphoratoms zu einem Ring verbunden sind;
$R^3$ für einen geradkettigen oder verzweigten Alkylrest mit 2 bis 18 Kohlenstoffatomen, einen 3 bis 10 Kohlenstoffatome enthaltenden cycloaliphatischen Rest, einen Phenyl- oder Naphtylrest, einen S-, O- oder N-haltigen fünf- oder sechsgliedrigen heterocyclischen Rest steht, wobei die Reste $R^3$ gegebenenfalls weitere Substituenten tragen können, oder für die Gruppierung

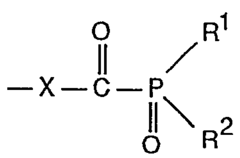

steht, worin $R^1$ und $R^2$ die oben angegebene Bedeutung haben und X für einen Phenylrest oder einen 2 bis 6 Kohlenstoffatome enthaltenden aliphatischen oder cycloaliphatischen zweiwertigen Rest steht und gegebenenfalls einer oder mehrere der Reste $R^1$ bis $R^3$ olefinisch ungesättigt ist.

Derartige Acylphosphinoxid-Verbindungen sind aus der Europäischen Patentschrift Nr. 0 007 086 bekannt.

Bei den Polymerisationslacken gemäss vorliegender Erfindung haben sich die nachstehend aufgeführten Acylphosphinoxid-Verbindungen als besonders bevorzugt herausgestellt:
2,4,6-Trimethylbenzoyl-diphenyl-phosphinoxid,
2,6-Dimethoxybenzoyl-diphenyl-phosphinoxid,
2,6-Dichlorbenzoyl-diphenyl-phosphinoxid,
2,3,5,6-Tetramethylbenzoyl-diphenyl-phosphinoxid und
2,4,6-Trimethylbenzoyl-phenylphosphinsäuremethylester.

Es können auch Gemische der vorstehend genannten Lichtinitiatoren verwendet werden.

Gegebenenfalls können zusammen mit den vorgenannten Lichtinitiatoren auch andere bekannte Lichtinitiatoren mitverwendet werden, wie Benzildialkylketale, insbesondere Benzildimethylketal, oder deren Gemische. Derartige Lichtinitiatoren dürfen jedoch nur in einer solchen Menge mitverwendet werden, dass das Gewichtsverhältnis von 2-Hydroxy-2-methyl-1-phenyl-propan-1-on und/oder Acylphosphinoxid-Verbindung zu den zusätzlichen Lichtinitiatoren höchstens 3:1 beträgt, denn wenn die zusätzlichen Lichtinitiatoren in einer höheren Menge vorliegen, kann es zu einer Vergilbung der Dichtungsmasse kommen.

Das Gewichtsverhältnis der Komponente (a) zur Komponente (b) beträgt 100 zu 0,5 bis 100 zu 5.

Für die Elastizitätsmodifizierungsmittel der Komponente (c) werden Polyurethane, Butadien-Styrol-Mischpolymerisate und/oder Reaktionsprodukte von freie Isocyanatgruppen aufweisenden Polyurethanen mit Hydroxylgruppen aufweisenden Polybutadienen verwendet.

Jeweils bezogen auf das Gewicht der Komponente (a) gelangen die Polyurethane in einer Menge von 4 bis 45 Gewichtsprozent, vorzugsweise 20 bis 30 Gewichtsprozent, die Butadien-Styrol-Mischpolymerisate in einer Menge von 4 bis 12 Gewichtsprozent, vorzugsweise 6 bis 7 Gewichtsprozent, und die Reaktionsprodukte von freie Isocyanatgruppen aufweisenden Polyurethanen mit Hydroxylgruppen aufweisenden Polybutadienen in einer Menge von 5 bis 15 Gewichtsprozent, vorzugsweise 8 bis 12 Gewichtsprozent, zum Einsatz.

Die Polyurethane weisen vorzugsweise ein Molekulargewicht von 2000 bis 4000 auf und sind entweder flüssig oder in dem Vernetzungsmittel löslich. Sie basieren auf aliphatischen oder aromatischen Di- und Triisocyanaten, wie Toluylen-2,4-diisocyanat, Toluylen-2,6-Diisocyanat oder deren Gemische, einzelne Diphenylmethan-diisocyanate oder deren Gemische, Isophoron-diisocyanat, Trimethyl-hexamethylen-diisocyanat und ein Addukt von m- oder p-Tetramethylxyloldiisocyanat an Trimethylolpropan, und einem langkettigen Polyol (mit mindestens 5 Kohlenstoffatomen) und/oder Polyätherpolyol. Sie werden in üblicher Weise, gegebenenfalls in Gegenwart eines Reaktionsbeschleunigers, unter Bildung von freie Isocyanatgruppen aufweisenden Präpolymerisaten hergestellt. Anschliessend werden die Präpolymerisate bis zur Absättigung mit einem Amin, Polyamin, Polyol, Polyätherpolyl und/oder Caprolactonacrylat umgesetzt. Hierbei hat es sich als besonders zweckmässig erwiesen, dass bei einer Umsetzung der Präpolymerisate das Amin und/oder das Polyamin in dem Vernetzungsmittel gelöst zugegeben wird, um eine Gelbildung zu vermeiden.

Es ist wesentlich, dass die Polyurethane keine freien Isocyanatgruppen aufweisen, bevor sie mit den ungesättigten Polyesterharzen und dem Vernetzungsmittel zusammengebracht werden, weil sonst die freien Isocyanatgruppen mit den ungesättigten Polyesterharzen reagieren. Es bilden sich hierbei verlängerte Ketten, die zu festen und in der einzusetzenden Menge Vernetzungsmittel kaum oder nur sehr schwer löslich sind. Man erzielt mit in der Kette verlängerten Polyesterharzen keine Dichtungsmittel nach der Erfindung bezüglich ihrer Elastizitätseigenschaft.

Je nach der Menge der Polyurethane im Dichtungsmittel nach der Erfindung kann man eine um 40 bis 300 Prozent verbesserte Dehnung erzielen, die auch bei Temperaturen bis zu -35°C nicht verlorengeht.

Mit Butadien-Styrol-Mischpolymerisaten und/ oder mit Reaktionsprodukten eines freie Isocyanatgruppen aufweisenden Polyurethans mit Hydroxylgruppen aufweisenden Polybutadien kann man die gleichen Ergebnisse erreichen. Nach einer besonders bevorzugten Ausführungsform werden Gemische aus Polyurethanen und Butadien-Styrol-Mischpolymerisaten eingesetzt, um die Dehnung und die Kältebeständigkeit bis zum Bruch noch zu steigern.

Gegebenenfalls können die Dichtungsmassen nach der Erfindung weiterhin an sich bekannte Hilfsstoffe und/oder Pigmente und/oder Farbstoffe enthalten.

Als Hilfsstoffe werden Absetzverhinderungsmittel, Hautbildungsmittel, Mattierungsmittel, Verdickungsmittel (Thixotropiemittel), lichtleitende Füllstoffe, Benetzungsmittel, Entlüftungsmittel, Verlaufmittel und Flammschutzmittel bezeichnet. Derartige Hilfsstoffe sollen zweckmässigerweise insgesamt in einer Menge bis zu 30 Gewichtsprozent, bezogen auf das Gewicht der Komponenten (a), (b) und (c), vorliegen.

Für Absetzverhinderungsmittel haben sich dehydratisiertes Ricinusöl, Bentonite und hochdisperse Kieselsäure als vorteilhaft erwiesen. Hochdisperse Kieselsäure ist besonders bevorzugt, weil sie gleichzeitig auch als Mattierungs- und Verdickungsmittel fungiert. Sie wird in einer Menge von 1 bis 4 Gewichtsprozent, bezogen auf die Komponente (a) eingesetzt, während die anderen Absetzverhinderungsmittel in Mengen von 0,5 bis 4,5 Gewichtsprozent vorliegen können.

Als Hautbildungsmittel werden Wachse, Paraffine – vorzugsweise vom Fp. 46 bis 72°C – sowie Polyäthylenwachse in Mengen von 0,05 bis 4 Gewichtsprozent, bezogen auf das Gewicht der Komponente (a), mitverwendet.

Ausser hochdisperser Kieselsäure werden Magnesiumoxid-Pulver oder Magnesiumstearat, das gleichzeitig als Mattierungsmittel und Absetzverhinderungsmittel dienen kann, in Mengen von 0,5 bis 4,5 Gewichtsprozent, bezogen auf das Gewicht der Komponente (a), eingesetzt.

Bevorzugte Beispiele für lichtleitende Füllstoffe sind Feldspat und Talkum, die vorzugsweise praktisch frei von Eisen- und sonstigen Schwermetallverbindungen sind, ferner Quarzmehl, Glasmehl, Glasfasermehl der Stapellänge unter 0,5 mm und einem Faserdurchmesser von 0,6 bis 10 µm, Aluminiumhydroxid vorzugsweise in Pulverform, Aluminiumsilicat-Pulver, catglasmehl. Bevorzugt wird als Talkum ein Magnesiumsilicat mit etwa 61 Prozent $SiO_2$, 31 Prozent MgO, 1 bis 5 Prozent $Al_2O_3$ und 1 bis 5 Prozent $H_2O$ verwendet. Das Quarzmehl soll vorzugsweise aus 99,5 Prozent $SiO_2$ bestehen. Für das Glasmehl und das Glasfasermehl eignet sich ein Normalglaspulver oder Normalglasfasern mit einer Länge unter 0,5 mm mit einem Gehalt von 73 Prozent $SiO_2$, 15 Prozent $Na_2O$ und 12 Prozent CaO. Das Aluminiumsilicat-Pulver soll vorzugsweise eine Zusammensetzung von 57 Prozent $SiO_2$, 20 Prozent $Al_2O_3$, 4 Prozent $B_2O_3$, 5 Prozent CaO und 12 Prozent MgO aufweisen. Für das Borsilicatglasmehl eignet sich ein Ausgangsprodukt von 70 bis 80 Prozent $SiO_2$, 2 bis 7 Prozent $Al_2O_3$ und 7 bis 13 Prozent $B_2O_3$.

Des weiteren können als Hilfsstoffe Benetzungsmittel, insbesondere und bevorzugt nichtionogene Tenside, nämlich fluorierte Alkylester, und/oder Siliconöle, ausserdem Entlüftungsmittel, wobei inerte und mit der Komponente (a) unverträgliche Polyacrylate in feindispergierter Form besonders bevorzugt sind, und schliesslich Verlaufsmittel, wie Silicone, zugegeben werden.

Die Dichtungsmassen nach der Erfindung können auch Flammschutzmittel, wie Chlor- und/ oder Bromverbindungen, beispielsweise Chlorparaffine mit einem Chlorgehalt von 40 bis 70 Gewichtsprozent, Hexabromcyclododecatrien, und/ oder Phosphorsäureester, vorzugsweise Diphenylcresylphosphat, Trichloräthylphosphat und Trioctylphosphat, in einer Menge von 4 bis 12 Gewichtsprozent enthalten, bezogen auf das Gewicht der Komponenten (a), (b) und (c).

Schliesslich können in den Dichtungsmassen Pigmente und bzw. oder Farbstoffe mt enthalten sein. Als Pigmente eignen sich in besonderer Weise Weisspigmente, wie Magnesiumtitanat ($MgTiO_3$) und/oder Titandioxid ($TiO_2$) vom Anatastyp, und auch Gelbpigmente, wie Chromoxidgelb, und/oder transparente Gelbfarbstoffe können in Mengen von 1 bis 15 Gewichtsprozent, vorzugsweise 7 bis 10 Gewichtsprozent, bezogen auf das Gewicht der Komponente (a), verwendet werden. Da die Pigmente ultraviolettes Licht remittieren, ist die Mitverwendung mindestens eines lichtleitenden Füllstoffs, wie vorstehend aufgeführt, erforderlich, weil sonst keine Härtung erfolgen kann. In diesem Zusammenhang ist es besonders wichtig, dass die Volumenmenge der lichtleitenden Füllstoffe das Fünffache bis mindestens ein Drittel der Volumenmenge der Pigmente beträgt. Die Korngrösse der Pigmente liegt in der Grössenordnung von 5 bis 100 µm und diejenige der lichtleitenden Füllstoffe im Bereich von 0,5 bis 100 µm. Korngrösse und auch Oberflächenbeschaffenheit der Pigmente und der lichtleitenden Füllstoffe können die Viskosität der Dichtungsmasse beeinflussen. Es ist deshalb darauf zu achten, dass für eine Verarbeitbarkeit, wie Auf- oder Anbringen, der Dichtungsmasse durch entsprechende Wahl der ungesättigten Polyester und der Elastizitätsmodifizierungsmittel und der Menge des Vernetzungsmittels die Viskosität im Bereich von 900 bis 3000, vorzugsweise bis 2500 cP liegt.

Einen weiteren Gegenstand vorliegender Erfindung bildet ein Verfahren zur Herstellung der Dichtungsmassen, das dadurch gekennzeichnet ist, dass man zuerst die Isocyanatgruppen eines freie Isocyanatgruppen aufweisenden Präpolymerisats aus einem aliphatischen oder aromatischen Di- oder Triisocyanat und einem langkettigen Diol mit mindestens 5 Kohlenstoffatomen im Molekühl und/oder einem Polyol mit einem Polyol, Polyätherpolyol, Amin, Polyamin und/oder mit Caprolacton-acrylat zu einem isocyanatgruppenfreien Polyurethan umsetzt, dann das Polyurethan in dem Vernetzungsmittel löst, in dieser Lösung das ungesättigte Polyesterharz und den Lichtinitiator löst und gegebenenfalls Hilfsstoffe und/oder Pigmente und/oder Farbstoffe zufügt.

Bei der Umsetzung des Isocyanatgruppen aufweisenden Präpolymerisats mit einem Amin und insbesondere mit einem Polyamin hat es sich als besonders vorteilhaft herausgestellt, wenn man vor der Zugabe des Amins oder Polyamins dieses in einem Teil des Vernetzungsmittels löst und die erhaltene Lösung mit dem Präpolymerisat zum Polyurethan umsetzt.

Zur Herstellung von besonders elastischen Dichtungsmassen ist es sehr vorteilhaft, wenn man als Polyol für die Absättigung der freien Isocyanatgruppen des Präpolymerisats ein freie Hydroxylgruppen aufweisendes Polybutadien, das zudem noch Ungesättigtheiten aufweist, verwendet, denn diese Ungesättigtheiten können in Gegenwart eines Lichtinitiators ebenfalls mit dem Vernetzungsmittel reagieren, so dass man hochvernetzte Dichtungsmassen erhält.

Bei einer Verwendung von Butadien-Styrol-Mischpolymerisaten anstelle von Polyurethan oder auch im Gemisch mit Polyurethanen wird bevorzugt Vinyltoluol als Vernetzungsmittel eingesetzt, das zumindest teilweise Styrol ersetzen kann.

Schliesslich bildet einen Gegenstand der Erfindung die Verwendung der Dichtungsmassen zur Abdichtung von Bauwerken, Dächern, Terrassen, Balkonen, zur Fundamentabdichtung von Bauwerken, sowie als Fugen-, Ausbesserungs- und Spachtelmassen.

Zur Erhöhung der Zug- und/oder Reissfestigkeit der Dichtungsmassen nach der Erfindung können in die Dichtungsmassen Fasern aus Glas, Polyacrylnitril und/oder Polyester eingebettet werden. Auch aus diesen Materialien gefertigte Gelege, Vliese, Gewirke und Gewebe können als Verstärkungsmittel verwendet werden.

Die Beispiele erläutern die Erfindung.

Beispiel 1

1 Mol eines Präpolymerisats aus Diphenylmethan-diisocyanat und Polytetramethylenätherglycol vom Molekulargewicht 1000 mit einem Gehalt von 7 bis 9 Prozent freie Isocyanatgruppen wird mit 0,8 Mol Polytetramethylenätherglycol vom Molekulargewichtsbereich 650 bis 2000 in Gegenwart von Dibutyl-zinn-laurat als Reaktionsbeschleuniger umgesetzt. Nach Prüfung des Restgehalts an Isocyanatgruppen wird die endgültige Absättigung mit etwa 0,05 bis 0,1 Mol Polytetramethylenätherglycol vom Molekulargewicht 650 bis 2000 vorgenommen.

Zu 350 g dieses Polyurethans gibt man 500 g Styrol und rührt das Gemisch, bis vollständige Lösung eingetreten ist. Zu dieser Lösung werden 1000 g eines ungesättigten Polyesters auf Basis von Adipinsäure und Neopentylglycol mit einem Gehalt von 1/4 Molanteil Maleinsäureanhydrid und 40 g 2,4,6-Trimethylbenzoyl-diphenylphosphinoxid zugegeben.

Die unter Lichtabschluss aufbewahrte Masse ist für mindestens 6 Monate lagerstabil, wenn das Styrol mit 0,02 Gewichtsprozent Butylcatechol stabilisiert (phlegmatisiert) worden ist.

Wenn die Dichtungsmasse als Terrassenabdichtung im diffusen Tageslicht aufgebracht wird, härtet sie in 10 bis 15 Minuten vollständig durch.

Beispiel 2

360 g eines Butadien-Styrol-Mischpolymerisats werden in 800 g Vinyltoluol gelöst. Die Lösung wird mit 3000 g des in Beispiel 1 genannten ungesättigten Polesters (bei dem der Maleinsäureanhydrid-Anteil durch Fumarsäure ersetzt worden ist) in 400 g mit 0,02 Hydrochinon Gew.% stabilisiertem Styrol-Vinyltoluol-Gemisch (Gewichtsverhältnis 2:1) und 80 g 2-Hydroxy-2-methyl-1-phenyl-propan-1-on als Lichtinitiator vermischt. Nach gründlicher Durchmischung fügt man 100 g hochdisperse Kieselsäure als Absetzverhinderungs-, Mattierungs- und Verdickungsmittel, 40 g Polyäthylenwachs als Hautbildungsmittel und 20 g fluorierten Alkylester als Benetzungsmittel hinzu.

Man erhält eine in 5 bis 10 Minuten im diffusen Tageslicht erhärtende Dichtungsmasse für Balkone und Flachdächer.

Beispiel 3

Aus einem im Handel erhältlichen Gemisch von 2,4- und 2,6-Toluylen-diisocyanat und einem Polytetramethylenätherglycol vom Molekulargewicht 950 bis 1000 wird ein Präpolymerisat mit einem Gehalt von etwa 12 Prozent freien Isocyanatgruppen hergestellt, wobei als Reaktionsbeschleuniger Dibutyl-zinn-dilaurat mitverwendet wird. Das Präpolymerisat wird in Styrol gelöst und mit freie Hydroxylgruppen aufweisendem Polybutadien (60 Prozent 1,4-trans-, 20 Prozent 1,4-cis- und 20 Prozent Vinylkonfiguration) reagieren gelassen, bis keine freien Isocyanatgruppen nachweisbar waren.

300 g der erhaltenen Lösung mit einem Polyurethangehalt von 70 Prozent werden mit 2000 g eines ungesättigten Polyesterharzes aus Adipinsäure und Maleinsäureanhydrid im Verhältnis 3:1, bezogen auf die Carboxylgruppen, und mit Neopentylglycol und weiteren 790 g Styrol vermischt. Nach gutem Durchrühren des Gemischs werden 100 g Magnesiumtitanat ($MgTiO_3$) und 200 g Talkum (praktisch frei von Eisen- und sonstigen Schwermetallverbindungen) sowie 100 g hochdisperse Kieselsäure und 50 g Polyäthylenwachs zugegeben. Das Gemisch wird im Vakuum-Mischer nachbehandelt, um Restmengen von $CO_2$ aus der Polyurethanlösung auszutreiben. Anschliessend werden 80 g eines Lichtinitiatorge-

mischs (60 g 2,6-Dimethoxybenzoyl-diphenylphospinoxid und 20 g Benzildimethylketal) eingerührt. Das Gemisch wird mit 0,05 Gewichtsprozent Hydrochinon, bezogen auf das Gewicht des Vernetzungsmittels, versetzt und in Tuben oder Kartuschen abgefüllt. Mit dem Tuben- oder Kartuscheninhalt kann man Fugen von Kacheln oder Zwischenräume an Bauwerken und Wänden abdichten.

Beispiel 4

1 Mol eines Präpolymerisats aus Isophoron-diisocyanat mit 1,4-Butan-diol mit einem Gehalt von 15 bis 17 Prozent freie Isocyanatgruppen und einem mittleren Molekulargewicht von 250 wird mit 0,7 Mol Polytetramethylenätherglycol vom Molekulargewicht 950 bis 1000 in Gegenwart von Dibutyl-zinn-dilaurat als Reaktionsbeschleuniger in 60prozentiger Lösung in Styrol umgesetzt. Nach Prüfung des Restgehalts an Isocyanatgruppen wird eine Absättigung der freien Isocyanatgruppen mit der notwendigen Menge Amin (H-Äquivalentgewicht 120 bis 200), 20prozentig in Styrol, vorgenommen.

Zu 1000 g dieser Lösung werden 3000 g eines ungesättigten Polyesterharzes auf Basis von Adipinsäure und Neopentylglycol mit einem Gehalt von 1/3 Molanteil Maleinsäureanhydrid, 75 prozentig gelöst in Styrol, zugegeben. Anschliessend werden 20 g 2,4,6-Trimethylbenzoyl-phenylphosphinsäure-methylester, 20 g 2,6-Dichlorbenzoyl-diphenylphosphinoxid, 10 g 2-Hydroxy-2-methyl-1-phenyl-1-propan-1-on und 15 g Benzildimethylketal als Lichtinitiatoren zugegeben.

Nach Zugabe von 600 g Aluminiumhydroxid, 50 g Paraffin vom Fp. 62°C, 48 g Bentonit, 200 g Chlorparaffin (flüssig; 70 Prozent Chlorgehalt), 280 g Hexabromcyclododecatrien, 1,2 g Siliconöl, 3 g Polyacrylsäureester als Entlüftungsmittel und 0,4 g 4-tert.-Butyl-brenzkatechin wird die Mischung im Vakuum-Mischer etwa 20 Minuten homogenisiert.

Man erhält eine Dichtungsmasse mit einer Viskosität von 1400 cP, die durch diffuses Tageslicht und auch bei direkter Sonneneinstrahlung im Temperaturbereich von −12°C bis +35°C in Schichtdicken bis zu 6 mm in 10 bis 20 Minuten vollständig durchhärtet und bei gleichzeitiger Verwendung eines Vlieses aus Polyesterfasern als Verstärkungsmaterial zur Abdichtung von Flachdächern und Gebäuden gegen Wasser und Feuchtigkeit geeignet ist, insbesondere wenn das Abdichtungsmittel erhöhten Anforderungen nach DIN 4102 (Widerstandsfähigkeit gegen Flugfeuer und strahlende Wärme) entsprechen muss.

Beispiel 5

1 Mol eines Präpolymerisats aus Toluylen-diisocyanat (ein im Handel erhältliches Gemisch der 2,4- und 2,6-Isomeren) und 1,4-Butan-diol mit einem Gehalt von etwa 4 Prozent freie Isocyanatgruppen und einem mittleren Molekulargewicht von 1050 wird mit 0,6 Mol Polytetramethylenätherglycol vom Molekulargewicht 650 in 65prozentiger Lösung in p-Vinyltoluol umgesetzt. Die Reaktion ist bei Raumtemperatur nach etwa 6 Stunden beendet. Nach Prüfung des Restgehalts an freien Isocyanatgruppen (etwa 1,2 bis 1,5 Prozent) wird eine Absättigung der freien Isocyanatgruppen durch Zugabe von Caprolacton-acrylat (Molekulargewicht 344) vorgenommen.

Zu 800 g der erhaltenen Lösung werden 2800 g eines ungesättigten Polyesterharzes gemäss Beispiel 4 zugegeben, das in einer 65prozentigen Lösung eines Gemischs aus einem Gewichtsteil p-Vinyltoluol und 1 Gewichtsteil Phthalsäure-diallylester gelöst ist.

Danach werden 45 g 2-Hydroxy-2-methyl-1-phenyl-propan-1-on, 25 g 2,6-Dichlorbenzoyl-diphenylphosphinoxid und 20 g Benzildimethylketal bis zur vollständigen Lösung eingemischt.

Nach Zugabe von 30 g Paraffin vom Fp. 54 bis 62°C, 50 g hochdisperser Kieselsäure, 1,5 g Siliconöl, 450 g Feldspat, 280 g Glasfasermehl und 0,2 g n-Butylcatechol wird die Gesamtmasse im Vakuumkneter entlüftet und anschliessend in einer Trichtermühle homogenisiert. Die erhaltene Dichtungsmasse hat einen Flammpunkt über 55°C und ist gefahrlos zu handhaben. Sie dient zur Abdichtung von Terrassen und Flachdächern.

Man kann die Dichtungsmasse auch in Eimer, Tuben und Kartuschen abfüllen und als Fugenabdichtung verwenden. Unter Lichtabschluss ist die Dichtungsmasse mindestens 6 Monate lagerstabil. Nach Zutritt von Tageslicht erhärtet die Dichtungsmasse innerhalb von 15 Minuten und behält bei Temperaturen bis −35°C ihre Elastizität bei.

**Patentansprüche**

1. Dichtungsmasse, gekennzeichnet durch einen Gehalt an

(a) ungesättigten Polyesterharzen und damit mischpolymerisierbaren Monomeren als Vernetzungsmittel,

(b) 2-Hydroxy-2-methyl-1-phenyl-propan-1-on und/oder Acylphosphinoxid-Verbindungen als Lichtinitiatoren und

(c) Polyurethanen und/oder Butadien-Styrol-Mischpolymerisaten und/oder einem Reaktionsprodukt eines freie Isocyanatgruppen aufweisenden Polyurethans mit einem Hydroxylgruppen aufweisenden Polybutadien als Elastizitätsmodifizierungsmittel und gegebenenfalls

(d) Hilfsmitteln und/oder Pigmenten und/oder Farbstoffen.

2. Dichtungsmasse nach Anspruch 1, dadurch gekennzeichnet, dass das ungesättigte Polyesterharz aus gesättigten und ungesättigten Dicarbonsäuren und/oder deren Anhydriden und Diolen besteht, wobei das Verhältnis von gesättigten zu ungesättigten Dicarbonsäuren 5:1 bis 5:10 beträgt.

3. Dichtungsmasse nach den Ansprüchen 1 bis 2, dadurch gekennzeichnet, dass das Vernetzungsmittel für die ungesättigten Polyesterharze mindestens eine aromatische und/oder aliphatische Vinylverbindung ist und in einer Menge von 25 bis 75 Gewichtsprozent, bezogen auf das Gewicht des ungesättigten Polyesterharzes, vorliegt.

4. Dichtungsmasse nach den Ansprüchen 1 bis 3, dadurch gekennzeichnet, dass sie als Acylphosphinoxid-Verbindung eine Verbindung der allgemeinen Formel

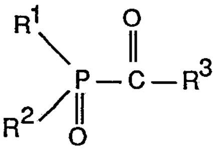

enthält, in der $R^1$ für einen geradkettigen oder verzweigten Alkylrest mit 1 bis 6 Kohlenstoffatomen, einen cyclohexyl-, cyclopentyl-, aryl-, halogen-, alkyl- oder alkoxyl-substituierten Aryl-, einen 5- oder N-haltigen fünf- oder sechsgliedrigen heterocyclischen Rest steht;
$R^2$ die Bedeutung von $R^1$ hat, wobei $R^1$ und $R^2$ untereinander gleich oder verschieden sein können, oder für einen Alkoxyrest mit 1 bis 6 Kohlenstoffatomen, für einen Aryloxy- oder einen Arylalkoxyrest steht, oder $R^1$ und $R^2$ unter Einbeziehung des Phosphoratoms zu einem Ring verbunden sind;
$R^3$ für einen geradkettigen oder verzweigten Alkylrest mit 2 bis 18 Kohlenstoffatomen, einen 3 bis 10 Kohlenstoffatome enthaltenden cycloaliphatischen Rest, einen Phenyl- oder Naphthylrest, einen S-, O- oder N-haltigen fünf- oder sechsgliedrigen heterocyclischen Rest steht, wobei die Reste $R^3$ gegebenenfalls weitere Substituenten tragen können, oder für die Gruppierung

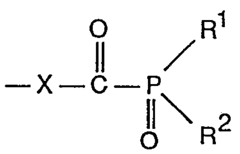

steht, wobei $R^1$ und $R^2$ die oben angegebene Bedeutung haben und X für einen Phenylrest oder einen 2 bis 6 Kohlenstoffatome enthaltenden aliphatischen oder cycloaliphatischen zweiwertigen Rest steht und gegebenenfalls einer oder mehrere der Reste $R^1$ bis $R^3$ olefinisch ungesättigt sind.

5. Dichtungsmasse nach den Ansprüchen 1 bis 4, dadurch gekennzeichnet, dass sie als zusätzlichen Lichtinitiator ein Benzildialkylketal und/oder Methylthioxanthon enthält, wobei das Gewichtsverhältnis von 2-Hydroxy-2-methyl-1-phenylpropan-1-on und/oder der Acylphosphinoxid-Verbindung zu den zusätzlichen Lichtinitiatoren höchstens 3:1 beträgt.

6. Dichtungsmasse nach den Ansprüchen 1 bis 5, dadurch gekennzeichnet, dass das Gewichtsverhältnis von Komponente (a) zu Komponente (b) 100:0,5 bis 100:5 beträgt.

7. Dichtungsmasse nach den Ansprüchen 1 bis 6, dadurch gekennzeichnet, dass als Komponente (c) Polyurethane in einer Menge von 4 bis 45 Gewichtsprozent, Butadien-Styrol-Mischpolymerisate in einer Menge von 4 bis 12 Gewichtsprozent und Reaktionsprodukte eines freie Isocyanatgruppen aufweisenden Polyurethans mit einem Hydroxylgruppen aufweisenden Polybutadien in einer Menge von 5 bis 15 Gewichtsprozent vorliegen, jeweils bezogen auf das Gewicht der Komponente (a).

8. Dichtungsmasse nach Anspruch 7, dadurch gekennzeichnet, dass die Polyurethane in einer Menge von 20 bis 30 in einer Menge von 6 bis 7 Gewichtsprozent und die Reaktionsprodukte eines freie Isocyanatgruppen aufweisenden Polyurethans mit einem Hydroxylgruppen aufweisenden Polybutadien in einer Menge von 8 bis 12 Gewichtsprozent vorliegen, jeweils bezogen auf das Gewicht der Komponente (a).

9. Dichtungsmasse nach den Ansprüchen 1 bis 8, dadurch gekennzeichnet, dass sie als Hilfsstoffe, Absetzverhinderungsmittel, Hautbildungsmittel, Mattierungsmittel, Verdickungsmittel (Thixotropiemittel), lichtleitende Füllstoffe, Benetzungsmittel, Entlüftungsmittel, Verlaufsmittel und/oder Flammschutzmittel enthält.

10. Dichtungsmasse nach den Ansprüchen 1 bis 9, dadurch gekennzeichnet, dass die Hilfsmittel insgesamt in einer Menge bis zu 30 Gewichtsprozent vorliegen, bezogen auf das Gewicht der Komponenten (a), (b) und (c).

11. Dichtungsmasse nach den Ansprüchen 1 bis 10, dadurch gekennzeichnet, dass sie als Pigmente und/oder Farbstoffe Magnesiumtitanat ($MgTiO_3$), Titandioxid ($TiO_2$) vom Anatas-Typ, Chromoxidgelb und/oder transparente organische Gelbfarbstoffe enthält.

12. Dichtungsmasse nach Anspruch 11, dadurch gekennzeichnet, dass die Pigmente und/oder Farbstoffe in einer Menge von 1 bis 15 Gewichtsprozent, vorzugsweise von 7 bis 10 Gewichtsprozent, vorliegen, bezogen auf das Gewicht der Komponente (a).

13. Dichtungsmasse nach Anspruch 9, dadurch gekennzeichnet, dass sie hochdisperse Kieselsäure als Absetzverhinderungsmittel, Mattierungsmittel und/oder Verdickungsmittel enthält.

14. Dichtungsmasse nach Anspruch 13, dadurch gekennzeichnet, dass sie 1 bis 4 Gewichtsprozent hochdisperse Kieselsäure enthält, bezogen auf das Gewicht der Komponente (a).

15. Dichtungsmasse nach den Ansprüchen 9, 10 und 13, dadurch gekennzeichnet, dass sie dehydratisiertes Ricinusöl und/oder Bentonite als Absetzverhinderungsmittel enthält.

16. Dichtungsmasse nach den Ansprüchen 9, 10, 13 und 14, dadurch gekennzeichnet, dass sie Polyäthylenwachse als Hautbildungsmittel und/oder Mattierungsmittel enthält.

17. Dichtungsmasse nach den Ansprüchen 9, 10 und 16, dadurch gekennzeichnet, dass sie Wachse und/oder Paraffine vom Fp. 46 bis 72°C als Hautbildungsmittel enthält.

18. Dichtungsmasse nach den Ansprüchen 9, 10, 16 und 17, dadurch gekennzeichnet, dass sie Wachs, das im Vernetzungsmittel der Komponente (a) gelöst ist, enthält.

19. Dichtungsmasse nach den Ansprüchen 9, 10 und 16 bis 18, dadurch gekennzeichnet, dass sie 0,05 bis 4 Gewichtsprozent Hautbildungsmittel enthält, bezogen auf das Gewicht der Komponente (a).

20. Dichtungsmasse nach den Ansprüchen 9, 10 und 13, dadurch gekennzeichnet, dass sie Magnesiumoxid-Pulver in einer Menge von 0,5 bis 4,5 Gewichtsprozent als Verdickungsmittel enthält, bezogen auf das Gewicht der Komponente (a).

21. Dichtungsmasse nach den Ansprüchen 9 und 10, dadurch gekennzeichnet, dass sie als lichtleitende Füllstoffe Feldspat (praktisch frei von Eisenverbindungen), Talkum (praktisch frei von Eisen- und sonstigen Schwermetallverbindungen), Quarzmehl, Glasmehl, Glasfasermehl, Aluminiumhydroxid, Aluminiumsilicat-Pulver und/oder Borsilicatglasmehl enthält.

22. Dichtungsmasse nach den Ansprüchen 9 bis 12 und 21, dadurch gekennzeichnet, dass die Volumenmenge der lichtleitenden Füllstoffe das Fünffache bis mindestens ein Drittel der Volumenmenge der Pigmente beträgt.

23. Dichtungsmasse nach den Ansprüchen 9 und 10, dadurch gekennzeichnet, dass sie als Benetzungsmittel nicht-ionogene Tenside, vorzugsweise fluorierte Alkylester, und/oder Siliconöle enthält.

24. Dichtungsmasse nach den Ansprüchen 9 und 10, dadurch gekennzeichnet, dass sie als Entlüftungsmittel inerte und mit der Komponente (a) unverträgliche Polyacrylate in feindispergierter Form enthält.

25. Dichtungsmasse nach den Ansprüchen 9 und 10, dadurch gekennzeichnet, dass sie als Verlaufsmittel Silicone enthält.

26. Dichtungsmasse nach den Ansprüchen 9 und 10, dadurch gekennzeichnet, dass sie als Flammschutzmittel organische Chlor- und/oder Bromverbindungen und/oder Phosphorsäureester in einer Menge von 4 bis 12 Gewichtsprozent enthält, bezogen auf das Gewicht der Komponente (a), (b) und (c).

27. Verfahren zur Herstellung der Dichtungsmassen nach den Ansprüchen 1 bis 26 dadurch gekennzeichnet, dass man die Isocyanatgruppen eines freie Isocyanatgruppen aufweisenden Präpolymerisats aus einem aliphatischen oder aromatischen Diisocyanat und einem langkettigen Diol und/oder Polyol mit einem Polyol, Polyätherpolyol, Amin, Polyamin oder mit Caprolactonacrylat zu einem isocyanatgruppenfreien Polyurethan umsetzt, das Polyurethan in dem Vernetzungsmittel löst, in dieser Lösung das ungesättigte Polyesterharz und Lichtinitiator löst und gegebenenfalls die Hilfsstoffe zufügt.

28. Verfahren nach Anspruch 27, dadurch gekennzeichnet, dass man das Amin und/oder das Polyamin zuerst in einem Teil der Menge des einzusetzenden Vernetzungsmittels löst und diese Lösung mit dem Präpolymeren zum Polyurethan umsetzt.

29. Verfahren nach Anspruch 27, dadurch gekennzeichnet, dass man als Polyol ein freie Hydroxylgruppen aufweisendes Polybutadien verwendet.

30. Verwendung der Dichtungsmassen nach den Ansprüchen 1 bis 29 zur Abdichtung von Bauwerken, Dächern, Terrassen, Balkonen, zur Fundamentabdichtung von Bauwerken, sowie als Fugen- und Ausbesserungsmassen.

## Revendications

1. Produit d'étanchéité, caractérisé en ce qu'il contient

a) des résines de polyesters insaturées et, en tant qu'agents réticulants, des monomères copolymérisables avec celles-ci,

b) de la 2-hydroxy-2-méthyl-1-phénylpropane-1-one et/ou des composés d'oxyde d'acylphosphine comme photoamorceurs,

c) des polyuréthannes et/ou des copolymères de butadiène-styrène et/ou un produit de réaction d'un polyuréthanne comportant des groupes isocyanates libres avec un polybutadiène hydroxylé comme modificateurs de l'élasticité et, éventuellement

d) des adjuvants et/ou des pigments et/ou des colorants.

2. Produit d'étanchéité selon la revendication 1, caractérisé en ce que la résine de polyester insaturée est constituée par des acides dicarboxyliques saturés et insaturés et/ou leur anhydrides et par des diols, le rapport des acides dicarboxyliques saturés aux acides dicarboxyliques insaturés se situant entre 5:1 et 5:10.

3. Produit d'étanchéité selon les revendications 1 à 2, caractérisé en ce que l'agent réticulant pour les résines de polyesters insaturées est au moins un composé vinylique aromatique et/ou aliphatique et est présent en une quantité allant de 25 à 75 pourcent en poids par rapport au poids de la résine de polyester insaturée.

4. Produit d'étanchéité selon les revendications 1 à 3, caractérisé en ce qu'il contient comme composé d'oxyde d'acylphosphine un composé de formule générale

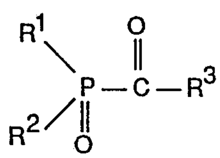

dans laquelle $R^1$ représente un rest alkyle à chaîne droite ou ramifiée avec 1 à 6 atomes de carbone, un reste aryle substitué par un cyclohexyle, un cyclopentyle, un aryle, un halogène, un alkyle ou un alcoxy, un reste hétérocyclique penta-ou hexagonal contenant S ou N;
$R^2$ a la signification de $R^1$, auquel cas $R^1$ et $R^2$ peuvent être identiques ou différents entre eux, représentent un reste alcoxy avec 1 à 6 atomes de carbone, un reste aryloxy ou arylalcoxy ou $R^1$ et $R^2$ forment un cycle par introduction d'un atome de phosphore;
$R^3$ représente un reste alkyle à chaîne droite ou ramifiée avec 2 à 18 atomes de carbone, un reste cycloaliphatique contenant 3 à 10 atomes de carbone, un reste phényle ou naphtyle, un reste hétérocyclique penta- ou hexagonal contenant S, O

ou N, auquel cas les restes $R^3$ peuvent être éventuellement porteurs d'autres substituants ou représentent le groupement

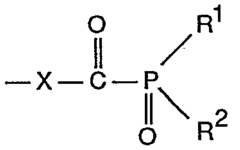

dans lequel $R^1$ et $R^2$ ont la signification précédente et X représente un reste phényle ou un reste aliphatique ou cycloaliphatique divalent contenant 2 à 6 atomes de carbone et dans lequel éventuellement un ou plusieurs des restes $R^1$ à $R^3$ sont oléfiniquement insaturés.

5. Produit d'étanchéité selon les revendications 1 à 4, caractérisé en ce qu'il contient comme photo-amorceur additionnel un benzildialkylcétal et/ou de la méthylthioxanthone, le rapport pondéral de 2-hydroxy-2-méthyl-1-phénylpropane-1-one et/ou de composé d'oxyde d'alcylphosphine aux photo-amorceurs additionnels s'élevant tout au plus à 3:1.

6. Produit d'étanchéité selon les revendications 1 à 5, caractérisé en ce que le rapport pondéral du composant (a) au composant (b) se situe entre 100:0,5 et 100:5.

7. Produit d'étanchéité selon les revendications 1 à 6, caractérisé en ce que, en tant que composant (c), des polyuréthannes sont présents en une quantité de 4 à 45 pourcent en poids, des copolymères de butadiène-styrène sont présents en une quantité de 4 à 12 pourcent en poids et des produits de réaction d'un polyuréthanne comportant des groupes isocyanates libres avec du polybutadiène hydroxylé sont présents en une quantité de 5 à 15 pourcent en poids, chaque fois par rapport au poids du composant (a).

8. Produit d'étanchéité selon la revendication 7, caractérisé en ce que les polyuréthannes sont présents en une quantité allant de 20 à 30 pourcent en poids, les copolymères de butadiène-styrène sont présents en une quantité allant de 6 à 7 pourcent en poids et les produits de réaction d'un polyuréthanne comportant des groupes isocyanates libres avec un polybutadiène hydroxylé sont présents en une quantité allant de 8 à 12 pourcent en poids, rapportés chaque fois au poids du composant (a).

9. Produit d'étanchéité selon les revendications 1 à 8, caractérisé en ce qu'il contient comme additifs des agents anti-sédimentation, des agents formant peau, des agents matants, des épaississants (agents thixotropants), des matières de charge conduisant la lumière, des agents mouillants, des agents de débullage, des agents de tension et/ou des ignifugeants.

10. Produit d'étanchéité selon les revendications 1 à 9, caractérisé en ce que les additifs sont présents au total en une quantité jusqu'à 30 pourcent en poids par rapport au poids des composants (a), (b) et (c).

11. Produit d'étanchéité selon les revendications 1 à 10, caractérisé en ce qu'il contient comme pigments et/ou comme colorants du titanate de magnésium ($MgTIO_3$), du dioxyde de titane ($TiO_2$) de type anatase, de l'oxyde de chrome jaune et/ou des colorants jaunes organiques transparents.

12. Produit d'étanchéité selon la revendication 11, caractérisé en ce que les pigments et/ou les colorants sont présents en une quantité de 1 à 15 pourcent en poids, de préférence de 7 à 10 pourcent en poids, par rapport au poids du composant (a).

13. Produit d'étanchéité selon la revendication 9, caractérisé en ce qu'il contient de la silice finement dispersée comme agent anti-sédimentation, agent matant et/ou épaississant.

14. Produit d'étanchéité selon la revendication 13, caractérisé en ce qu'il contient 1 à 4 pourcent en poids de silice finement dispersée, rapportés au poids du composant (a).

15. Produit d'étanchéité selon les revendications 9, 10 et 13, caractérisé en ce qu'il contient de l'huile de ricin déshydratée et/ou des bentonites comme agent anti-sédimentation.

16. Produit d'étanchéité selon les revendications 9, 10, 13 et 14, caractérisé en ce qu'il contient des cires de polyéthylène comme agents formant peau et/ou comme agents matants.

17. Produit d'étanchéité selon les revendications 9, 10 et 16, caractérisé en ce qu'il contient comme agents formant peau des cires et/ou des paraffines d'un pt. F° de 46 à 72°C.

18. Produit d'étanchéité selon les revendications 9, 10, 16 et 17, caractérisé en ce qu'il contient de la cire qui est dissoute dans l'agent réticulant du composant (a).

19. Produit d'étanchéité selon les revendications 9, 10 et 16 à 18, caractérisé en ce qu'il contient 0,05 à 4 pourcent en poids d'agent formant peau, rapportés au poids du composant (a).

20. Produit d'étanchéité selon les revendications 9, 10 et 13, caractérisé en ce qu'il contient comme épaississant de la poudre d'oxyde de magnésium en une quantité de 0,5 à 4,5 pourcent en poids, par rapport au poids du composant (a).

21. Produit d'étanchéité selon les revendications 9 et 10, caractérisé en ce qu'il contient comme matières de charge conduisant la lumière du feldspath (pratiquement exempt de composés du fer), du talc (pratiquement exempt de composés du fer et d'autres métaux lourds), de la poudre de quartz, de la poudre de verre, de la pourdre de fibres de verre, de l'hydroxyde d'aluminium, de la poudre de silicate d'aluminium et/ou de la poudre de verre au borosilicate.

22. Produit d'étanchéité selon les revendications 9 à 12 et 21, caractérisé en ce que la quantité volumique des matières de charge conduisant la lumière représente le quintuple jusqu'au moins le tiers de la quantité volumique des pigments.

23. Produit d'étanchéité selon les revendications 9 et 10, caractérisé en ce qu'il contient comme agents mouillants des agents de surface non ioniques, de préférence des esters alkyliques fluorés et/ou des huiles de silicone.

24. Produit d'étanchéité selon selon les revendications 9 et 10, caractérisé en ce qu'il contient comme agents de débullage des polyacrylates à l'état finement dispersé, inertes et incompatibles avec le composant (a).

25. Produit d'étanchéité selon les revendications 9 et 10, caractérisé en ce qu'il contient des silicones comme agents de tension.

26. Produit d'étanchéité selon les revendications 9 et 10, caractérisé en ce qu'il contient comme agents ignifuges des composés organiques chlorés et/ou bromés et/ou des esters phosphoriques en une quantité de 4 à 12 pourcent en poids par rapport au poids des composants (a), (b) et (c).

27. Procédé de préparation des produits d'étanchéité selon les revendications 1 à 26, caractérisé en ce que l'on fait réagir les groupes isocyanates d'un prépolymère comportant des groupes isocyanates libres obtenu à partir d'un diisocyanate aliphatique ou aromatique, d'un diol à longue chaîne et/ou d'un polyol, avec un polyol, un polyéther-polyol, une amine, une polyamine ou de l'acrylate de caprolactone pour obtenir un polyuréthanne dépourvu de groupes isocyanates, que l'on dissout le polyuréthanne dans l'agent réticulant, dissout la résine de polyester insaturée et le photoamorceur dans cette solution et incorpore éventuellement les additifs.

28. Procédé selon la revendication 27, caractérisé en ce que l'on dissout tout d'abord l'amine et/ou la polyamine dans une partie de la quantité de l'agent réticulant mis en œuvre et que l'on fait réagir cette solution avec le prépolymère en vue de l'obtention du polyuréthanne.

29. Procédé selon la revendication 27, caractérisé en ce qu'on utilise comme polyol un polybutadiène comportant des groupes hydroxyles libres.

30. Utilisation des produits d'étanchéité selon les revendications 1 à 29 pour l'étanchéification de bâtiments, de toits, de terrasses, de balcons, pour l'étanchéification des fondations de bâtiments ainsi qu'en tant que joints et produits de réparation.

## Claims

1. A sealing compound, characterized in that it contains

a) unsaturated polyester resins and monomers copolymerizable therewith as crosslinking agents,

(b) 2-hydroxy-2-methyl-1-phenylpropan-1-one and/or acylphosphine oxide compounds as photo initiators and

(c) polyurethanes and/or butadiene-styrene copolymers and/or a reaction product of a polyurethane containing free isocyanate groups with a polybutadiene containing hydroxyl groups as elasticity modifiers and, optionally,

(d) auxiliaries and/or polymers and/or dyes.

2. A sealing compound as claimed in Claim 1, characterized in that the unsaturated polyester resin consists of saturated and unsaturated dicarboxylic acids and/or anhydrides thereof and diols, the ratio of saturated to unsaturated dicarboxylic acids being 5:1 to 5:10.

3. A sealing compound as claimed in Claims 1 and 2, characterized in that the crosslinking agent for the unsaturated polyester resins is at least one aromatic and/or aliphatic vinyl compound and is present in a quantity of 25 to 75% by weight, based on the weight of the unsaturated polyester resin.

4. A sealing compound as claimed in Claims 1 to 3, characterized in that it contains as the acyl phosphine oxide compound a compound corresponding to the following general formula

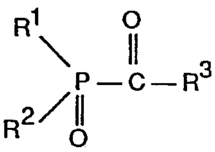

in which $R^1$ is a linear or branched $C_1$–$C_6$ alkyl radical, a cyclohexyl-, cyclopentyl-, aryl-, halogen-, alkyl- or alkoxyl-substituted aryl radical, an S- or N-containing five- or six-membered heterocyclic radical;

$R^2$ has the same meaning as $R^1$, $R^1$ and $R^2$ being the same or different, or is a $C_1$–$C_6$ alkoxy radical, an aryloxy or an arylalkoxy radical or $R^1$ and $R^2$ including the phosphorus atom are joined to form a ring;

$R^3$ is a linear or branched $C_2$–$C_{18}$ alkyl radical, a $C_3$–$C_{10}$ cycloaliphatic radical, a phenyl or naphthyl radical, an S-, O- or N-containing five- or six-membered heterocyclic radical, the radicals $R^3$ optionally bearing further substituents, or the group

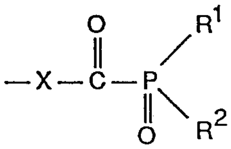

where $R^1$ and $R^2$ have the meaning defined above and X is a phenyl radical or a $C_2$–$C_6$ aliphatic or cycloaliphatic difunctional radical and one or more radicals $R^1$ to $R^3$ are optionally olefinically unsaturated.

5. A sealing compound as claimed in Claims 1 to 4, characterized in that it contains as additional photoinitiator a benzildialkylketal and/or methylthioxanthone, the ratio by weight of 2-hydroxy-2-methyl-1-phenylpropan-1-one and/or the acyl phosphine oxide compound to the additional photoinitiators being at most 3:1.

6. A sealing compound as claimed in Claims 1 to 5, characterized in that the ratio by weight of component (a) to component (b) is 100:0.5 to 100:5.

7. A sealing compound as claimed in Claims 1 to 6, characterized in that it contains polyurethanes in a quantity of from 4 to 45% by weight, butadiene-styrene copolymers in a quantity of

from 4 to 12% by weight and reaction products of a polyurethane containing free isocyanate groups with a polybutadiene containing hydroxyl groups in a quantity of from 5 to 15% by weight, based in each case on the weight of component (a), as component (c).

8. A sealing compound as claimed in Claim 7, characterized in that the polyurethanes are present in a quantity of from 20 to 30% by weight, the butadiene-styrene copolymers in a quantity of from 6 to 7% by weight and the reaction products of a polyurethane containing free isocyanate groups with a polybutadiene containing hydroxyl groups in a quantity of from 8 to 12% by weight, based in each case on the weight of component (a).

9. A sealing compound as claimed in Claims 1 to 8, characterized in that it contains as auxiliaries sedimentation inhibitors, skin-forming agents, flatting agents, thickeners (thixotropicizing agents), photoconductive fillers, wetting agents, deaerating agents, levelling agents and/or flameproofing agents.

10. A sealing compound as claimed in Claims 1 to 9, characterized in that the auxiliaries are present in a total quantity of up to 30% by weight, based on the weight of components (a), (b) and (c).

11. A sealing compound as claimed in Claims 1 to 10, characterized in that it contains a pigments and/or dyes magnesium titanate ($MgTiO_3$), titanium dioxide ($TiO_2$) of the anatase type, chromium oxide yellow and/or transparent organic yellow dyes.

12. A sealing compound as claimed in Claim 11, characterized in that the pigments and/or dyes are present in a quantity of from 1 to 15% by weight and preferably in a quantity of from 7 to 10% by weight, based on the weight of component (a).

13. A sealing compound as claimed in Claim 9, characterized in that it contains highly disperse silica as the sedimentation inhibitor, flatting agents and/or thickener.

14. A sealing compound as claimed in Claim 13, characterized in that it contains from 1 to 4% by weight of highly disperse silica, based on the weight of component (a).

15. A sealing compound as claimed in Claims 9, 10 and 13, characterized in that it contains dehydrated castor oil and/or bentonite as sedimentation inhibitor.

16. A sealing compound as claimed in Claims 9, 10, 13 and 14, characterized in that it contains polyethylene waxes as skin-forming agents and/or matting agents.

17. A sealing compound as claimed in Claims 9, 10 and 16, characterized in that it contains waxes and/or paraffins melting at 46 to 72°C as skin-forming agents.

18. A sealing compound as claimed in Claims 9, 10, 16 and 17, characterized in that it contains wax dissolved in the crosslinking agent of component (a).

19. A sealing compound as claimed in Claims 9, 10 and 16 to 18, characterized in that it contains 0.05 to 4% by weight skin-forming agent, based on the weight of component (a).

20. A sealing compound as claimed in Claims 9, 10 and 13, characterized in that it contains magnesium oxide powder in a quantity of 0.5 to 4.5% by weight, based on the weight of component (a), as thickener.

21. A sealing compound as claimed in Claims 9 and 10, characterized in that it contains as photoconductive fillers feldspar (substantially free from iron compounds), talcum (substantially free from iron and other heavy-metal compounds), quartz powder, glass powder, glassfibre powder, aluminium hydroxide, aluminium silicate powder and/or boron silicate glass powder.

22. A sealing compound as claimed in Claims 9 to 12 and 21, characterized in that the quantity by volume of the photoconductive fillers is five times to at least one third of the quantity by volume of the pigments.

23. A sealing compound as claimed in Claims 9 and 10, characterized in that it contains nonionic surfactants, preferably fluorinated alkylesters, and/or silicone oils as wetting agents.

24. A sealing compound as claimed in Claims 9 and 10, characterized in that it contains inert polyacrylates incompatible with component (a) in finely dispersed form as deaerating agents.

25. A sealing compound as claimed in Claims 9 and 10, characterized in that it contains silicones as levelling agents.

26. A sealing compound as claimed in Claims 9 and 10, characterized in that it contains chlorine and/or bromine compounds and/or phosphoric acid esters in a quantity of 4 to 12% by weight, based on the weight of component (a), (b) and (c), as flameproofing agents.

27. A process for the production of the sealing compounds claimed in Claims 1 to 26, characterized in that the isocyanate groups of a prepolymer containing free isocyanate groups of an aliphatic or aromatic diisocyanate and a longchain diol and/or polyol are reacted with a polyol, polyether polyol, amine, polyamine or with caprolactone acrylate to form an isocyanate-free polyurethane, the polyurethane is dissolved in the crosslinking agent, the unsaturated polyester resin and photoinitiator are dissolved in the resulting solution and the auxiliaries are optionally added.

28. A process as claimed in Claim 27, characterized in that the amine and/or the polyamine are first dissolved in part of the quantity of crosslinking agent to be used and the resulting solution is reacted with the prepolymer to form the polyurethane.

29. A process as claimed in Claim 27, characterized in that a polybutadiene containing free hydroxyl groups is used as the polyol.

30. The use of the sealing compounds claimed in Claims 1 to 29 for sealing buildings, roofs, terraces, balconies, for sealing the foundations of buildings and as gap-filling and repairing compounds.